# EUROPÄISCHE PATENTSCHRIFT

(11) **EP 1 216 569 B1**
(45) Veröffentlichungstag und Bekanntmachung des Hinweises auf die Patenterteilung: **28.11.2012**
(21) Anmeldenummer: 00975796.4
(22) Anmeldetag: 27.09.2000
(51) Int. Cl.: H04M 3/42

(54) **VERFAHREN FÜR EIN KOMMUNIKATIONSNETZ ZUR REALISIERUNG EINER NETZKNOTENÜBERGREIFENDEN BENUTZERMOBILITÄT**
METHOD FOR A COMMUNICATION NETWORK THAT ALLOWS INTER-NODE USER MOBILITY
PROCEDE POUR RESEAU DE COMMUNICATION PERMETTANT DE PARVENIR A UNE MOBILITE INTERNODALE DE L'UTILISATEUR

(30) Priorität: 30.09.1999 DE 19946976
(43) Veröffentlichungstag der Anmeldung: 26.06.2002
(73) Patentinhaber: Siemens Enterprise Communications GmbH & Co. KG, 81379 München (DE)
(72) Erfinder: SANTA, Rosa, A-1010 Wien (AT); WILLE, Klaus, 81679 München (DE); MAYER, Georg, 83714 Miesbach (DE)
(74) Vertreter: Fritzsche, Thomas
(86) Internationale Anmeldenummer: PCT/DE2000/003357
(87) Internationale Veröffentlichungsnummer: WO 2001/024487

(56) Entgegenhaltungen:
- ETSI TC-BTC: "ETR 280 - Business TeleCommunications (BTC); Private Integrated Services Network (PISN); Private User Mobility (PUM); Impact of PUM on the PISN" [Online] März 1996 (1996-03) , ETSI XP002163328 Gefunden im Internet: <URL: http://www.etsi.org/eds/eds.htm> [gefunden am 2001-03-20] Absatz [04.2] Absatz [4.4.3] Absatz [6.1.3] Absatz [08.1]
- "Standard ECMA-282 2nd Edition - Private Integrated Services Network (PISN) - Inter-Exchange Signalling Protocol - Private User Mobility (PUM) - Registration Supplementary Service" [Online] Juni 2000 (2000-06) , ECMA XP002163329 Gefunden im Internet: <URL: http://www.ecma.ch/> [gefunden am 2001-03-20] Absatz [6.5.1.1] Absatz [6.5.3.1] & "Standard ECMA-282 1st Edition" Dezember 1998 (1998-12)
- "Standard ECMA-284 2nd Edition - Private Integrated Services Network (PISN) - Inter-Exchange Signalling Protocol - Private User Mobility (PUM) - Call Handling Additional Network Features" [Online] Juni 2000 (2000-06) , ECMA XP002163330 Gefunden im Internet: <URL: http://www.ecma.ch/> [gefunden am 2001-03-20] Absatz [6.5.1] - Absatz [6.5.2] & "Standard ECMA-284 1st Edition" Dezember 1998 (1998-12)
- "EG 202 102 V1.2.1 - Private Integrated Services Network (PISN); Service profiles of mobile PISN users; General requirements" [Online] Mai 1995 (1995-05) , ETSI XP002163378 Gefunden im Internet: <URL: http://www.etsi.org/eds/eds.htm> [gefunden am 2001-03-20] Absatz [0001] Absatz [0004]

## Beschreibung

Bei Kommunikationssystemen in Unternehmensnetzen kommt es häufig vor, daß ein Endgerät temporär unterschiedlichen Benutzern zugeordnet wird. Zeitgemäße Kommunikationssysteme erlauben es, bei einem temporären Wechsel des Aufenthaltsortes eines Benutzers einem am neuen Aufenthaltsort befindlichen Endgerät eine dem Benutzer fest zugeordnete Benutzerrufnummer zuzuweisen, so daß der Benutzer auch an seinem neuen Aufenthaltsort unter seiner üblichen Benutzerrufnummer erreichbar ist.

Bei einem Wechsel eines Benutzers zu einem neuen Endgerät besteht jedoch auch das Bedürfnis, daß der Benutzer am neuen Endgerät über möglichst viele seiner bisherigen Benutzereinstellungen, wie z.B. benutzerindividuelle Leistungsmerkmalaktivierungen oder Einstellungen seiner Benutzeroberfläche, verfügt, ohne diese Einstellungen nochmals tätigen zu müssen. Die Möglichkeit eines Benutzers zwischen unterschiedlichen Endgeräten unter möglichst weitgehender Beibehaltung benutzerindividueller Einstellungen zu wechseln, wird häufig auch als Benutzermobilität oder "Shared Desk"-Mobilität bezeichnet.

Hierzu ist aus der Patentschrift US 4 899 373 ein Verfahren bekannt, bei dem benutzerindividuelle Einstellungsdaten in einer zentralen Datenbank zum Abrufen abgespeichert sind. Die benutzerindividuellen Einstellungsdaten können dabei von einer Vielzahl von Endgeräten aus abgerufen werden, so daß bei einem Wechsel eines Benutzers zu einem neuen Endgerät, die dem Benutzer in der Datenbank zugeordneten Einstellungsdaten auf einfache Weise vom neuen Endgerät aus übernommen werden können.

Bei diesem Verfahren ist jedoch eine Beibehaltung einer dem Benutzer fest zugeordneten Benutzerrufnummer nicht vorgesehen. Dies müßte daher bei Bedarf auf andere Weise realisiert werden, was zusätzlichen Aufwand erforderte. Weiterhin ist das bekannte Verfahren nicht darauf abgestimmt, die Vorteile zeitgemäßer, auf einem Kommunikationsnetz mit einer Vielzahl von miteinander vernetzten Netzknoten basierender Kommunikationssysteme adäquat zu nutzen.

In dem Dokument ETR 280 - Business TeleCommunications (BTC); Private Integrated Services Network (PISN); Private User Mobility (PUM); Impact of PUM on the PISN, März 1996 (1996-03), ETSI XP002163328, ist eine Anordnung zur privaten Benutzermobilität in einem privaten Netzwerk beschrieben, bei der einer Heimat-Knoteneinheit des privaten Netzwerks eine Heimat-Datenbank und einer Besucher-Knoteneinheit des privaten Netzwerks eine Besucher-Datenbank zugeordnet sind. Bei einem Wechsel des Benutzers von der Heimat-Knoteneinheit zu der Besucher-Knoteneinheit ändert das private Netzwerk einen Benutzereintrag in der Heimat-Datenbank, der nun auf die Besucher-Knoteneinheit hinweist. Wie mittels Heimat-Datenbank und Besucher-Datenbank eine private Benutzermobilität durch das private Netzwerk im Einzelnen erreicht werden soll, ist nicht beschrieben.

Es ist Aufgabe der vorliegenden Erfindung ein Verfahren anzugeben, das in einem Kommunikationsnetz einen netzknotenübergreifenden Wechsel eines Benutzers zu einem anderen Endgerät unter Beibehaltung benutzerindividueller Einstellungen auf einfache Weise individuell erlaubt.

Gelöst wird diese Aufgabe durch ein Verfahren mit den Merkmalen des Patentanspruchs 1.

Das erfindungsgemäße Verfahren wird initiiert, indem ein Benutzer sich bei einem an einem ersten Netzknoten eines Kommunikationsnetzes angekoppelten Endgerät durch Eingabe einer Anmeldeinformation anmeldet. Die Eingabe der Anmeldeinformation kann dabei z.B. durch Betätigen einer oder mehrerer Funktionstasten, durch Eingabe eines zu diesem Zweck vorgesehenen Eingabecodes oder im Rahmen einer menügesteuerten Eingabeprozedur erfolgen. Anschließend wird als weitere Benutzerangabe eine den Benutzer sowie einen zweiten Netzknoten des Kommunikationsnetzes identifizierende Identifizierungsinformation eingelesen und zum ersten Netzknoten übermittelt. Durch die weitere Benutzereingabe wird der zweite Netzknoten als derjenige Netzknoten identifiziert, von dem in Folge benutzerindividuelle Konfigurationsdaten für den Benutzer abzurufen sind. Die abzurufenden Konfigurationsdaten können dabei z.B. Einstellinformationen für eine benutzerindividuelle Bedienoberfläche, benutzerindividuelle Leistungsmerkmaleinstellungen und zugehörige Leistungsmerkmaldaten umfassen.

Der zweite Netzknoten kann z.B. ein zentraler, für den Benutzer zuständiger Server oder ein Heimatnetzknoten des Benutzers sein, in denen jeweils die benutzerindividuellen Konfigurationsdaten gespeichert sind. Als Identifizierungsinformation wird dabei erfindungsgemäß eine dem Benutzer fest zugeordnete Benutzerrufnummer eingegeben, die sowohl den Benutzer als auch seinen Heimatnetzknoten bzw. den zuständigen zentralen Server identifiziert.

Anhand der eingegebenen Identifizierungsinformation wird durch den ersten Netzknoten der zweite Netzknoten als derjenige Netzknoten ermittelt, von dem die Konfigurationsdaten abzurufen sind. Der erste Netzknoten übermittelt dem zweiten Netzknoten daraufhin eine den Benutzer identifizierende Benutzeridentifizierungsinformation, z.B. eine eingegebene Benutzerrufnummer, sowie eine den ersten Netzknoten identifizierende Adreßinformation. Die Adreßinformation und die Benutzeridentifizierungsinformation werden vom zweiten Netzknoten abgespeichert, um mit deren Hilfe ein Zuleiten nachfolgend für den identifizierten Benutzer beim zweiten Netzknoten eintreffender Verbindungsanforderungen zum ersten Netzknoten und von dort zum Endgerät zu veranlassen.

Der Benutzer kann somit sicherstellen, daß er unabhängig davon an welchem Endgerät er sich anmeldet, auf gleiche Weise, nämlich über den anhand der Benutzereingabe identifizierten zweiten Netzknoten, für externe Verbindungsanforderungen erreichbar ist.

Nach Empfang der Adreßinformation und der Benutzeridentifizierungsinformation übermittelt der zweite Netzknoten die dem durch die Benutzeridentifizierungsinformation identifizierten Benutzer zugeordneten Konfigurationsdaten zum durch die Adreßinformation identifizierten, ersten Netzknoten. Der erste Netzknoten veranlaßt daraufhin ein Einstellen einer durch die übermittelten Konfigurationsdaten angegebenen Benutzerkonfiguration für den Benutzer.

Vorteilhafte Ausführungsformen und Weiterbildungen der Erfindung sind in den abhängigen Ansprüchen angegeben.

Gemäß einer vorteilhaften Weiterbildung der Erfindung können eine oder mehrere Berechtigungsprüfungen durchgeführt werden, die den Verfahrensablauf beeinflussen. So kann vom Endgerät eine Benutzerauthentifizierungsinformation, wie z.B. eine sog. PIN-Nummer, eingelesen werden, die zum zweiten Netzknoten übertragen und dort überprüft wird. Weiterhin kann durch den ersten und/oder den zweiten Netzknoten überprüft werden, ob der Benutzer dazu berechtigt ist, durch den ersten Netzknoten das Einstellen der Benutzerkonfiguration zu veranlassen. Ferner kann der zweite Netzknoten überprüfen, ob ein Benutzer überhaupt berechtigt ist, eine Übertragung von Konfigurationsdaten vom zweiten zum ersten Netzknoten zu veranlassen. Bei negativem Prüfungsergebnis kann das Verfahren jeweils abgebrochen werden. Zusätzlich können erfolglose Anmeldeversuche fortschreitend protokolliert werden und/oder eine gegebenenfalls temporäre Blockierung veranlassen.

Nach einer vorteilhaften Ausführungsform der Erfindung kann zur Datenübermittlung zwischen dem ersten und dem zweiten Netzknoten eine Signalisierungsverbindung vorzugsweise mittels des sog. QSIG-Signalisierungsprotokolls gemäß ETSI-Standard aufgebaut werden.

Nach einer weiteren vorteilhaften Weiterbildung der Erfindung können bei einem Abmelden des am Endgerät angemeldeten Benutzers Konfigurationsdaten, die nach ihrer Übermittlung zum ersten Netzknoten geändert wurden, vom ersten zum zweiten Netzknoten übertragen werden, um dort im Sinne einer Aktualisierung der Konfigurationsdaten abgespeichert zu werden. Auf diese Weise können z.B. von dem am ersten Endgerät angemeldeten Benutzer oder einen Systemadministrator vorgenommene Änderungen der Benutzerkonfiguration für nachfolgende Anmeldungen des Benutzers an anderen Endgeräten erhalten werden.

Das Abmelden eines Benutzers kann auf unterschiedliche Weise erfolgen; so z.B. durch Eingabe einer Abmeldeinformation durch den Benutzer oder einen Systemadministrator, nach Auftreten einer Fehlfunktion oder automatisch zu einer vorgegebenen Zeit oder nach Ablauf einer vorgegebenen Zeitspanne. Eine Eingabe einer Abmeldeinformation kann dabei z.B. durch Betätigen einer oder mehrerer Funktionstasten, durch Eingabe eines zu diesem Zweck vorgesehenen Eingabecodes oder im Rahmen einer menügesteuerten Eingabeprozedur erfolgen. Zur Abmeldung kann vorteilhafterweise eine Benutzerauthentifizierung durchgeführt werden.

Ein Ausführungsbeispiel der Erfindung wird nachfolgend anhand der Zeichnung näher erläutert.

Dabei zeigen jeweils in schematischer Darstellung
- Fig 1: ein Kommunikationsnetz beim Anmelden eines Benutzers an einem Endgerät und
- Fig 2: dasselbe Kommunikationsnetz beim Abmelden des Benutzers.

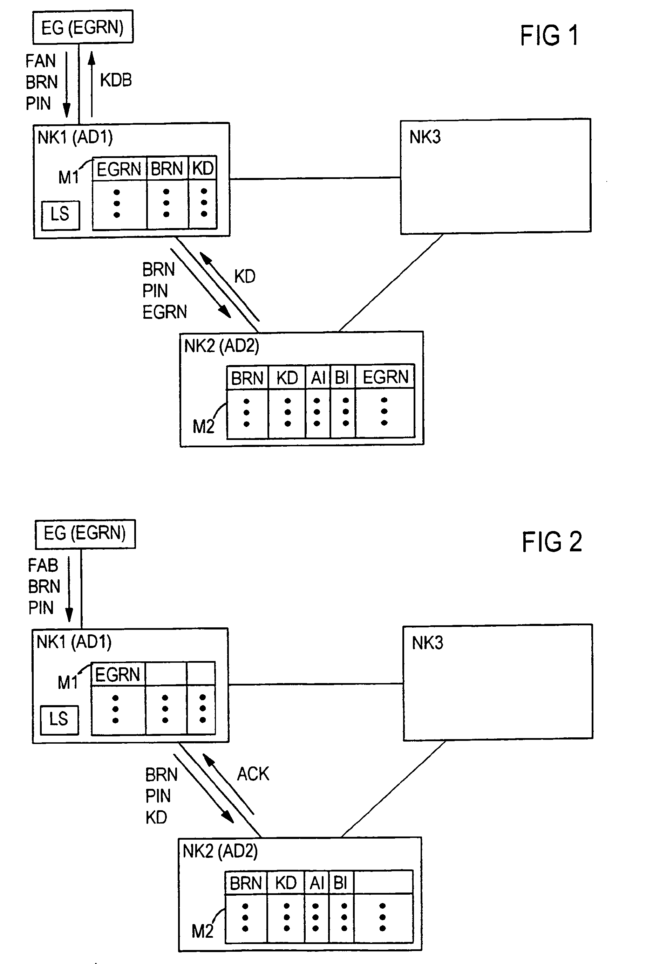

In Fig 1 und Fig 2 ist jeweils dasselbe Kommunikationsnetz mit drei untereinander gekoppelten Netzknoten NK1, NK2 und NK3 und einem an den Netzknoten NK1 angekoppelten Endgerät EG schematisch dargestellt. Dem Endgerät EG ist dabei die Endgeräterufnummer EGRN, dem Netzknoten NK1 die Netzknotenadresse AD1 und dem Netzknoten NK2 die Netzknotenadresse AD2 als jeweils eindeutig identifizierende Adreßinformation zugeordnet. Die Endgeräterufnummer EGRN des Endgerätes EG identifiziert dabei auch den Netzknoten NK1, an den dieses Endgerät EG angeschlossen ist.

Im Netzknoten NK1 sind als Funktionskomponenten eine Leistungsmerkmalsteuerung LS sowie ein Anmeldespeicher M1 für Benutzerdaten von an einem Endgerät des Netzknotens NK1 temporär angemeldeten Benutzern dargestellt.

Der Netzknoten NK2 verfügt über einen Benutzerspeicher M2, in dem Benutzerdaten von Benutzern, für die der Netzknoten NK2 Heimatnetzknoten oder zuständiger Server ist, gespeichert sind. Im Benutzerspeicher M2 des Netzknotens NK2 ist für jeden Benutzer, für den der Netzknoten NK2 Heimatnetzknoten oder zuständiger Server ist, ein Datensatz mit einer dem Benutzer fest zugeordneten Benutzerrufummer BRN, benutzerindividuellen Konfigurationsdaten KD, einer benutzerindividuellen Authentifizierungsinformation AI sowie benutzerindividuellen Berechtigungsinformationen BI abgespeichert. Durch die Benutzerrufnummer BRN wird sowohl der jeweilige Benutzer als auch dessen Heimatnetzknoten bzw. zuständiger Server, hier NK2, identifiziert. Die Konfigurationsdaten KD können z.B. Einstellinformationen für eine benutzerindividuelle Bedienoberfläche mit LED-Einstellungen, Funktionstastenbelegungen, Menüeinstellungen etc. und benutzerindividuelle Leistungsmerkmaleinstellungen wie gesetzte Anrufumleitungen, ein Kurzwahlverzeichnis, Mailbox-Einstellungen etc., umfassen.

Fig 1 veranschaulicht den Verfahrensablauf bei einer Anmeldung eines beim Netzknoten NK2 beheimateten Benutzers am Endgerät EG des Netzknotens NK1. Der Benutzer initiiert seine Anmeldung durch Eingabe eines dazu vorgesehenen Funktionscodes FAN als Anmeldeinformation am Endgerät EG. Dieses übermittelt den eingegebenen Funktionscode FAN zum Netzknoten NK1, der daraufhin eine Abfrage der individuellen Benutzerrufnummer BRN des Benutzers sowie einer sog. PIN-Nummer PIN (personal identification number) vom Benutzer veranlaßt. Die eingegebene Benutzerrufnummer BRN und die eingegebene PIN-Nummer PIN werden anschließend zum Netzknoten NK1 übertragen.

Im diesem wird aus der Benutzerrufnummer BRN die Netzknotenadresse AD2 des Heimatnetzknotens, hier NK2, des Benutzers ermittelt. Die Benutzerrufnummer BRN wird zugeordnet zur Endgeräterufnummer EGRN desjenigen Endgerätes EG, über das die Anmeldung erfolgt, im Anmeldespeicher M1 gespeichert. Anhand der ermittelten Netzknotenadresse AD2 des Netzknotens NK2 wird vom Netzknoten NK1 weiterhin eine Signalisierungsverbindung gemäß dem sog. QSIG-Signalisierungsprotokoll zum Netzknoten NK2 aufgebaut. Über die aufgebaute Signalisierungsverbindung wird anschließend die Benutzerrufnummer BRN, die PIN-Nummer PIN - gegebenenfalls in verschlüsselter Form - und die Endgeräterufnummer EGRN zum Netzknoten NK2 im Rahmen einer Anforderung von Konfigurationsdaten übertragen.

Durch den Netzknoten NK2 wird infolgedessen der Benutzerspeicher M2 nach der übermittelten Benutzerrufnummer BRN durchsucht und der die Benutzerrufnummer BRN enthaltende und damit dem Benutzer zugeordnete Datensatz ermittelt. Anhand der im ermittelten Datensatz enthaltenen Authentifizerungsinformation AI wird daraufhin die übermittelte PIN-Nummer PIN geprüft. Sofern der Benutzer dadurch erfolgreich authentifiziert wird, wird weiterhin die Berechtigung des Benutzers zum Anfordern der Konfigurationsdaten KD über das Endgerät EG anhand der im ermittelten Datensatz enthaltenen Berechtigungsinformationen BI überprüft. Falls auch diese Prüfung positiv ausfällt, wird die übermittelte Endgeräterufnummer EGRN in dem ermittelten Datensatz - zugeordnet zur Benutzerrufnummer BRN - abgespeichert. Darüber hinaus werden die im ermittelten Datensatz enthaltenen benutzerindividuellen Konfigurationsdaten KD über die Signalisierungsverbindung zum Netzknoten NK1 übertragen.

Im vorliegenden Ausführungsbeispiel werden unter der Benutzerrufnummer BRN für den Benutzer ankommende Anrufe vom Kommunikationsnetz zunächst zum Heimatnetzknoten bzw. zum für den Benutzer zuständigen Server, hier NK2, geführt. Dieser ermittelt daraufhin die der Benutzerrufnummer BRN im Benutzerspeicher zugeordnete Endgeräterufnummer EGRN. Anschließend wird durch den Netzknoten NK2 die zu ihm im Rahmen des Anrufes aufgebaute Teilverbindung abgebaut und ein Aufbau einer neuen, direkten Verbindung vom Anrufer zum durch die Endgeräterufnummer EGRN identifizierten Endgerät EG veranlaßt. Dieses auch als "Rerouting" bezeichnete Umleiten ankommender Verbindungen kann auf besonders einfache Weise mit Hilfe des QSIG-Signalisierungsprotokolls durchgeführt werden. Der Benutzer ist damit auch am besuchten Endgerät EG unter seiner üblichen Benutzerrufnummer BRN erreichbar.

Nach Empfang der benutzerindividuellen Konfigurationsdaten KD, werden diese durch den Netzknoten NK1 im Anmeldespeicher M1 zugeordnet zur Endgeräterufnummer EGRN abgespeichert. Weiterhin werden die Konfigurationsdaten KD der Leistungsmerkmalsteuerung LS zugeführt, die ein Einstellen einer durch die Konfigurationsdaten KD angegebenen benutzerindividuellen Leistungsmerkmalkonfiguration für den Benutzer veranlaßt. Wenn auf diese Weise eine Anrufumleitung für den Benutzer aktiviert wird, werden nachfolgend für den Benutzer eintreffende Anrufe gemäß den obenstehenden Ausführungen mit dem Umweg über den Heimatnetzknoten NK2 zum Netzknoten NK1 geleitet und erst von diesem zu den betreffenden Anrufumleitungszielen weitergeleitet.

Darüber hinaus wird ein Teil KDB der Konfigurationsdaten KD vom Netzknoten NK1 zum Endgerät EG übermittelt, um dort ein Einstellen einer benutzerindividuellen Bedienoberfläche für den Benutzer zu veranlassen.

Fig 2 veranschaulicht den Verfahrensablauf beim Abmelden des Benutzers vom Endgerät EG. Der Benutzer meldet sich im vorliegenden Ausführungsbeispiel durch Eingabe eines dazu vorgesehenen Funktionscodes FAB am Endgerät EG ab. Dieses übermittelt den eingegebenen Funktionscode FAB zum Netzknoten NK1, der daraufhin eine erneute Abfrage der individuellen Benutzerrufnummer BRN sowie der PIN-Nummer PIN vom Benutzer veranlaßt. Die eingegebene Benutzerrufnummer BRN und die eingegebene PIN-Nummer PIN werden anschließend zum Netzknoten NK1 übertragen.

Vom Netzknoten NK1 wird daraufhin erneut eine Signalisierungsverbindung gemäß dem QSIG-Signalisierungsprotokoll zum Netzknoten NK2 aufgebaut, über die die Benutzerrufnummer BRN und die PIN-Nummer PIN im Rahmen einer Benutzerabmeldung zum Netzknoten NK2 übertragen werden. Nach einer erfolgreichen Authentifizierung des Benutzers anhand der erneut übermittelten PIN-Nummer wird die der erneut übermittelten Benutzerrufnummer BRN im Benutzerspeicher M2 zugeordnete Endgeräterufnummer EGRN gelöscht. Damit wird für unter der Benutzerrufnummer BRN für den Benutzer beim Netzknoten NK2 eintreffende Anrufe kein "Rerouting" mehr veranlaßt.

Ferner wird nach der erfolgreichen Authentifizierung eine Bestätigungsinformation ACK vom Netzknoten NK2 zum Netzknoten NK1 übertragen. Dies veranlaßt den Netzknoten NK1 zur Rückübertragung der eventuell durch den Benutzer während des Anmeldezeitraums geänderten Konfigurationsdaten KD zum Netzknoten NK2. Die rückübertragenen Konfigurationsdaten KD werden durch den Netzknoten NK2 anstelle der bisher dem Benutzer zugeordneten Konfigurationsdaten im Benutzerspeicher M2 abgespeichert, wodurch dieser aktualisiert wird. Vom angemeldeten Benutzer vorgenommene Änderungen der Benutzerkonfiguration bleiben somit für nachfolgende Anmeldungen des Benutzers an anderen Endgeräten erhalten. Nach Empfang der Bestätigungsinformation ACK werden vom Netzknoten NK1 weiterhin die der Endgeräterufnummer EGRN im Anmeldespeicher M1 zugeordnete Benutzerrufnummer BRN und zugeordneten Konfigurationsdaten KD gelöscht. Dabei werden durch die Leistungsmerkmalsteuerung LS die für den Benutzer vorgenommenen Benutzereinstellungen wieder rückgängig gemacht.

Vorteilhafterweise kann ein Benutzer auch auf Veranlassung seines Heimatnetzknotens, hier NK2, von einem ersten Endgerät abgemeldet werden, wenn bei diesem Netzknoten NK2 eine Anmeldungsanforderung desselben Benutzers von einem anderen Endgerät aus eintrifft. In diesem Fall werden die Konfigurationsdaten zunächst im Rahmen der Abmeldung - wie oben ausgeführt - in den Benutzerspeicher M2 zurückgeschrieben bevor eine Anmeldung des Benutzers am anderen Endgerät erfolgt.

Weiterhin kann bei einem Registrieren einer Fehlersituation, z.B. bei einem Ausfall des Netzknotens NK1 oder der Verbindung zu diesem, durch den Netzknoten NK2 auch eine Abmeldung des Benutzers ohne ein Zurückschreiben von Konfigurationsdaten erfolgen. In diesem Fall bleiben die ursprünglichen Konfigurationsdaten erhalten und es wird kein "Rerouting" von für den Benutzer eintreffenden Anrufen mehr veranlaßt.

Darüber hinaus kann eine Abmeldung eines Benutzers auch auf Veranlassung des ersten Netzknotens NK1 erfolgen, wenn dieser durch den zweiten Netzknoten NK2 umgeleitete Anrufe für einen Benutzer empfängt, der im ersten Netzknoten NK1 nicht oder nicht mehr registriert ist. Ein solcher Fall kann z.B. dann eintreten, wenn der Anmeldespeicher M1 bei einem fehlerbedingten Neustart des Betriebssystems des Netzknotens NK1 gelöscht wird.

## Patentansprüche

1. Verfahren für ein Kommunikationsnetz zur Realisierung einer netzknotenübergreifenden Benutzermobilität,
**dadurch gekennzeichnet, dass**
a) nach Eingabe einer Anmeldeinformation (FAN) durch einen Benutzer an einem mit einem ersten Netzknoten (NK1) des Kommunikationsnetzes gekoppelten Endgerät (EG), als weitere Benutzereingabe eine den Benutzer sowie einen zweiten Netzknoten (NK2) mit gespeicherten benutzerindividuellen Konfigurationsdaten (KD) identifizierende Benutzerrufnummer(BRN) eingelesen und zum ersten Netzknoten (NK1) übermittelt wird,
b) durch den ersten Netzknoten (NK1) anhand der eingegebenen Benutzerrufnummer (BRN) der zweite Netzknoten (NK2) ermittelt wird, und zu diesem die den Benutzer identifizierende Benutzerrufnummer (BRN) sowie eine den ersten Netzknoten (NK1) identifizierende Adreßinformation (EGRN) übermittelt werden,
c) die Adreßinformation (EGRN) vom zweiten Netzknoten (NK2) dem durch die übermittelte Benutzerrufnummer (BRN) identifizierten Benutzer zugeordnet abgespeichert wird, um mit Hilfe der Adreßinformation (EGRN) ein Zuleiten nachfolgend für den identifizierten Benutzer beim zweiten Netzknoten (NK2) eintreffender Verbindungsanforderungen zum ersten Netzknoten (NK1) und von dort zum Endgerät (EG) zu veranlassen,
d) vom zweiten Netzknoten (NK2) dem identifizierten Benutzer zugeordnete benutzerindividuelle Konfigurationsdaten (KD) anhand der Adreßinformation (EGRN) zum ersten Netzknoten (NK1) übermittelt werden, und
e) durch den ersten Netzknoten (NK1) ein Einstellen einer durch die übermittelten Konfigurationsdaten (KD) angegebenen Benutzerkonfiguration für den Benutzer veranlaßt wird.

2. Verfahren nach Anspruch 1,
**dadurch gekennzeichnet,**
**daß** vom Endgerät (EG) eine Benutzerauthentifizierungsinformation (PIN) eingelesen und über den ersten Netzknoten (NK1) zum zweiten Netzknoten (NK2) übermittelt wird, daß die übermittelte Benutzerauthentifizierungsinformation (PIN) durch den zweiten Netzknoten (NK2) anhand einer in diesem gespeicherten, dem durch die übermittelte Benutzerrufnummer (BRN) identifizierten Benutzer zugeordneten Authentifizierungsinformation (AI) geprüft wird, und
**daß** nur bei positivem Prüfungsergebnis die Konfigurationsdaten (KD) zum ersten Netzknoten (NK1) übertragen werden.

3. Verfahren nach Anspruch 1 oder 2,
**dadurch gekennzeichnet,**
**daß** durch den ersten Netzknoten (NK1) anhand der Benutzereingaben geprüft wird, ob der Benutzer dazu berechtigt ist, durch den ersten Netzknoten (NK1) das Einstellen der Benutzerkonfiguration zu veranlassen.

4. Verfahren nach einem der vorhergehenden Ansprüche,
**dadurch gekennzeichnet,**
**daß** durch den zweiten Netzknoten (NK2) anhand einer jeweiligen Gruppenzugehörigkeit des identifizierten Benutzers und des Endgerätes (EG) geprüft wird, ob der identifizierte Benutzer dazu berechtigt ist, an diesem Endgerät (EG) das Einstellen der Benutzerkonfiguration zu veranlassen.

5. Verfahren nach einem der vorhergehenden Ansprüche,
**dadurch gekennzeichnet,**
**daß** durch den zweiten Netzknoten (NK2) geprüft wird, ob ein Benutzer dazu berechtigt ist, eine Übertragung von Konfigurationsdaten (KD) zum durch die Adreßinformation (EGRN) identifizierten ersten Netzknoten (NK1) zu veranlassen.

6. Verfahren nach einem der vorhergehenden Ansprüche,
**dadurch gekennzeichnet,**
**daß** zur Übermittlung der Benutzerrufnummer (BRN), der Adreßinformation (EGRN) und der Konfigurationsdaten (KD) eine Signalisierungsverbindung vom ersten (NK1) zum zweiten Netzknoten (NK2) aufgebaut wird.

7. Verfahren nach einem der vorhergehenden Ansprüche,
**dadurch gekennzeichnet,**
**daß** im Zuge eines Abmeldens des Benutzers Konfigurationsdaten (KD), die nach ihrer Übermittlung zum ersten Netzknoten (NK1) geändert wurden, vom ersten (NK1) zum zweiten Netzknoten (NK2) übertragen werden und
die übertragenen, geänderten Konfigurationsdaten (KD) durch den zweiten Netzknoten (NK2) im Sinne einer Aktualisierung der benutzerindividuellen Konfigurationsdaten (KD) abgespeichert werden.

8. Verfahren nach Anspruch 7,
**dadurch gekennzeichnet,**
**daß** zur Übermittlung der geänderten Konfigurationsdaten (KD) eine Signalisierungsverbindung vom ersten (NK1) zum zweiten Netzknoten (NK2) aufgebaut wird.

9. Verfahren nach Anspruch 6 oder 8,
**dadurch gekennzeichnet,**
**daß** die Signalisierungsverbindung mittels des QSIG-Signalisierungsprotokolls gemäß ETSI-Standard aufgebaut wird.

10. Verfahren nach einem der vorhergehenden Ansprüche,
**dadurch gekennzeichnet,**
**daß** ein vorgebbarer Teil von zu übertragenden Konfigurationsdaten (KD) priorisiert übertragen wird.

11. Verfahren nach einem der vorhergehenden Ansprüche,
**dadurch gekennzeichnet,**
**daß** eine von einem Anrufer zum zweiten Netzknoten (NK2) aufgebaute und an den Benutzer gerichtete Verbindung durch den zweiten Netzknoten (NK2) abgebaut wird und daraufhin auf Veranlassung des zweiten Netzknotens (NK2) eine direkte Verbindung durch das Kommunikationsnetz vom Anrufer zum durch die abgespeicherte Adreßinformation (EGRN) identifizierten, ersten Netzknoten (NK1) und von dort zum Endgerät (EG) aufgebaut wird.

12. Verfahren nach einem der Ansprüche 1 bis 10,
**dadurch gekennzeichnet,**
**daß** eine von einem Anrufer zum zweiten Netzknoten (NK2) aufgebaute und an den Benutzer gerichtete Verbindung durch den zweiten Netzknoten (NK2) zum durch die abgespeicherte Adreßinformation (EGRN) identifizierten, ersten Netzknoten (NK1) umgeleitet und von dort zum Endgerät (EG) weitergeleitet wird.

13. Verfahren nach einem der Ansprüche 1 bis 10,
**dadurch gekennzeichnet,**
**daß** die Adreßinformation (EGRN) und die Benutzerrufnummer (BRN) vom ersten Netzknoten (NK1) außer zum zweiten Netzknoten (NK2) auch zu weiteren Netzknoten (NK3) des Kommunikationsnetzes übertragen werden und die Adreßinformation (EGRN) dort jeweils dem durch die übermittelte Benutzerrufnummer (BRN) identifizierten Benutzer zugeordnet abgespeichert wird, um mit Hilfe der Adreßinformation (EGRN) nachfolgend für den identifizierten Benutzer bei einem der weiteren Netzknoten (NK3) eintreffende Verbindungsanforderungen in Richtung des ersten Netzknotens (NK1) weiterzuleiten.

14. Verfahren nach einem der vorhergehenden Ansprüche,
**dadurch gekennzeichnet,**
**daß** als zusätzliche Benutzereingabe eine Auswahlinformation eingelesen und zum zweiten Netzknoten (NK2) übertragen wird, wo
die zu übertragenden Konfigurationsdaten (KD) abhängig von der übertragenen Auswahlinformation aus Benutzerdaten selektiert werden.

15. Verfahren nach einem der vorhergehenden Ansprüche,
**dadurch gekennzeichnet,**
**daß** eine von technischen Eigenschaften des Endgerätes (EG) und/oder des ersten Netzknotens (NK1) abhängige Auswahlinformation vom ersten Netzknoten (NK1) zum zweiten Netzknoten (NK2) übertragen wird, wo
die zu übertragenden Konfigurationsdaten (KD) abhängig von der übertragenen Auswahlinformation aus Benutzerdaten selektiert werden.

## Claims

1. Method for a communication network that allows inter-node user mobility, **characterised in that**
a) after input of logon information (FAN) by a user on a terminal (EG) coupled with a first network node (NK1) of the communication network, as a further user input a user call number (BRN) identifying the user and a second network node (NK2) with stored user-specific configuration data (KD) are read and transmitted to the first network node (NK1),
b) from the entered user call number (BRN), the first network node (NK1) determines the second network node (NK2) and transmits to this the user call number (BRN) identifying the user and address information (EGRN) identifying the first network node (NK1),
c) the address information (EGRN) is stored by the second network node (NK2) allocated to the user identified by the transmitted user call number (BRN), in order, using the address information (EGRN), to initiate transfer of connection requests for the identified user subsequently reaching the second network node (NK2) to the first network node (NK1) and from there to the terminal (EG),
d) using the address information (EGRN), the second network node (NK2) transmits to the first network node (NK1) the user-specific configuration data (KD) allocated to the identified user, and
e) the first network node (NK1) initiates the adaptation of a user configuration for the user given by the transmitted configuration data (KD).

2. Method according to claim 1, **characterised in that** the terminal (EG) reads a user authentication information (PIN) and transmits this via the first network node (NK1) to the second network node (NK2),
that the transmitted user authentication information (PIN) is checked by the second network node (NK2) against an authentication information (Al) allocated to a user stored therein and identified by the transmitted user call number (BRN), and
that only if the test result is positive are the configuration data (KD) transmitted to the first network node (NK1).

3. Method according to claim 1 or 2, **characterised in that** the first network node (NK1) checks against the user input whether the user is entitled to initiate the adaptation of user configuration by the first network node (NK1).

4. Method according to any one of the preceding claims, **characterised in that** the second network node (NK2) checks against a respective group membership of the identified user and the terminal (EG) whether the identified user is entitled to initiate the adaptation of the user configuration on this terminal (EG).

5. Method according to any one of the preceding claims, **characterised in that** the second network node (NK2) checks whether a user is entitled to initiate a transmission of configuration data (KD) to first network node (NK1) identified by the address information (EGRN).

6. Method according to any one of the preceding claims, **characterised in that** to transmit the user call number (BRN), address information (EGRN), and configuration data (KD), a signalling connection is created from the first (NK1) to the second network node (NK2).

7. Method according to any one of the preceding claims, **characterised in that** as part of the user log-off process, configuration data (KD) which were changed after their transmission to the first network node (NK1) are transmitted by the first network node (NK1) to the second network node (NK2), and
the transmitted modified configuration data (KD) are stored by the second network node (NK2) in the sense of updating of the user-specific configuration data (KD).

8. Method according to claim 7, **characterised in that** to transmit the modified configuration data (KD), a signalling connection is created from the first (NK1) to the second network node (NK2).

9. Method according to claim 6 or 8, **characterised in that** the signalling connection is created using the QSIG signalling protocol to ETSI standard.

10. Method according to any one of the preceding claims, **characterised in that** a predefinable part of the configuration data (KD) to be transmitted is transmitted as priority.

11. Method according to any one of the preceding claims, **characterised in that** a connection created by a caller to the second network node (NK2) and directed at the user is disconnected by the second network node (NK2) and thereupon at the initiation of the second network node (NK2) a direct connection is created by the communication network from the caller to the first network node (NK1) identified by the stored address information (EGRN) and from there to the terminal (EG).

12. Method according to any one of claims 1 to 10, **characterised in that** a connection created by a caller to the second network node (NK2) and directed at the user is diverted by the second network node (NK2) to the first network node (NK1) identified by the stored address information (EGRN) and from there passed to the terminal (EG).

13. Method according to any one of claims 1 to 10, **characterised in that** the address information (EGRN) and the user call number (BRN) are transmitted by the first network node (NK1) not only to the second network node (NK2) but also to further network nodes (NK3) of the communication network and the address information (EGRN) is there stored allocated to the user identified by the transmitted user call number (BRN), in order, using the address information (EGRN), to pass on connection requests for the identified user subsequently reaching a further network node (NK3) in the direction of the first network node (NK1).

14. Method according to any one of the preceding claims, **characterised in that** as additional user input, a selection information is read and transmitted to the second network node (NK2), wherein the configuration data (KD) to be transmitted are selected from user data depending on the transmitted selection information.

15. Method according to any one of the preceding claims, **characterised in that** a selection information depending on technical properties of the terminal (EG) and/or the first network node (NK1) is transmitted from the first network node (NK1) to the second network node (NK2), wherein the configuration data (KD) to be transmitted are selected from user data depending on the transmitted selection information.

## Revendications

1. Procédé pour un réseau de communication servant à parvenir à une mobilité internodale de l'utilisateur, **caractérisé en ce que**
a) après l'entrée d'une information d'ouverture de session (FAN) par un utilisateur sur un terminal (EG) couplé à un premier noeud de réseau (NK1) du réseau de communication, un numéro d'appel d'utilisateur (BRN) identifiant l'utilisateur ainsi qu'un deuxième noeud de réseau (NK2) avec des données de configuration (KD) stockées propres à l'utilisateur est lu et transmis au premier noeud de réseau (NK1) en tant qu'entrée d'utilisateur supplémentaire,
b) le premier noeud de réseau (NK1) permet à l'aide du numéro d'appel d'utilisateur (BRN) entré de déterminer le deuxième noeud de réseau (NK2), et le numéro d'appel d'utilisateur (BRN) identifiant l'utilisateur ainsi qu'une information relative à l'adresse identifiant le premier noeud de réseau (NK1) sont transmis audit deuxième noeud de réseau,
c) l'information relative à l'adresse (EGRN) est mémorisée de manière associée à l'utilisateur identifié par le numéro d'appel d'utilisateur (BRN) transmis par le deuxième noeud de réseau (NK2) afin d'initier à l'aide de l'information relative à l'adresse (EGRN) un transfert de manière consécutive des demandes de connexion entrantes dans le deuxième noeud de réseau (NK2) pour l'utilisateur identifié, vers le premier noeud de réseau (NK1) et de là vers le terminal (EG),
d) des données de configuration (KD) propres à l'utilisateur associées à l'utilisateur identifié par le deuxième noeud de réseau (NK2) sont transmises au premier noeud de réseau (NK1) à l'aide de l'information relative à l'adresse (EGRN), et
e) le premier noeud de réseau (NK1) permet d'initier un réglage d'une configuration d'utilisateur indiquée par les données de configuration (KD) transmises pour l'utilisateur.

2. Procédé selon la revendication 1,
**caractérisé en ce**
**qu'**une information d'authentification d'utilisateur (PIN) est lue par le terminal (EG) et est transmise par l'intermédiaire du premier noeud de réseau (NK1) au deuxième noeud de réseau (NK2),
en ce que l'information d'authentification d'utilisateur transmise est contrôlée par le deuxième noeud de réseau (NK2) à l'aide d'une information d'authentification (AI) stockée dans le deuxième noeud de réseau, associée à l'utilisateur identifié par le numéro d'appel d'utilisateur (BRN), et
en ce que les données de configuration (KD) ne sont transférées au premier noeud de réseau (NK1) qu'en cas de résultat de contrôle positif.

3. Procédé selon la revendication 1 ou 2,
**caractérisé en ce**
**que** le premier noeud de réseau (NK1) permet de contrôler à l'aide des entrées d'utilisateur si l'utilisateur est autorisé à initier le réglage de la configuration utilisateur par le premier noeud de réseau (NK1).

4. Procédé selon l'une quelconque des revendications précédentes,
**caractérisé en ce**
**que** le deuxième noeud de réseau (NK2) permet de contrôler à l'aide d'une appartenance à un groupe respective de l'utilisateur identifié et du terminal (EG) si l'utilisateur identifié est autorisé à initier au niveau du terminal le réglage de la configuration utilisateur.

5. Procédé selon l'une quelconque des revendications précédentes,
**caractérisé en ce**
**que** le deuxième noeud de réseau (NK2) permet de contrôler si un utilisateur est autorisé à initier un transfert de données de configuration (KD) vers le premier noeud de réseau (NK1) identifié par l'information relative à l'adresse (EGRN).

6. Procédé selon l'une quelconque des revendications précédentes,
**caractérisé en ce**
**qu'**une liaison de signalisation entre le premier noeud de réseau (NK1) et le deuxième noeud de réseau (NK2) est établie pour transmettre les numéros d'appel d'utilisateur (BRN), l'information relative à l'adresse (EGRN) et les données de configuration (KD).

7. Procédé selon l'une quelconque des revendications précédentes,
**caractérisé en ce**
**que** dans le cadre d'une fermeture de session de l'utilisateur, des données de configuration (KD), qui ont été modifiées après leur transmission au premier noeud de réseau (NK1), sont transférées du premier noeud de réseau (NK1) au deuxième noeud de réseau (NK2), et
en ce que les données de configuration (KD) modifiées, transférées sont mémorisées par le deuxième noeud de réseau (NK2) au sens d'une mise à jour des données de configuration (KD) propres à l'utilisateur.

8. Procédé selon la revendication 7,
**caractérisé en ce**
**qu'**une liaison de signalisation entre le premier noeud de réseau (NK1) et le deuxième noeud de réseau (NK2) est établie aux fins de la transmission des données de configuration (KD) modifiées.

9. Procédé selon la revendication 6 ou 8,
**caractérisé en ce**
**que** la liaison de signalisation est établie au moyen du protocole de signalisation QSIG selon la norme ETSI.

10. Procédé selon l'une quelconque des revendications précédentes,
**caractérisé en ce**
**qu'**une partie pouvant être prédéfinie de données de configuration (KD) à transmettre est transmise de manière prioritaire.

11. Procédé selon l'une quelconque des revendications précédentes,
**caractérisé en ce**
**qu'**une liaison établie entre un appelant et le deuxième noeud de réseau (NK2) et dirigée vers l'utilisateur est établie par le deuxième noeud de réseau (NK2), et en ce qu'après à l'initiative du deuxième noeud de réseau (NK2), une liaison directe est établie par le réseau de communication entre l'appelant et le premier noeud de réseau (NK1) identifié par l'information relative à l'adresse (EGRN) mémorisée, et est établie de là vers le terminal (EG).

12. Procédé selon l'une quelconque des revendications 1 à 10,
**caractérisé en ce**
**qu'**une connexion établie entre l'appelant et le deuxième noeud de réseau (NK2) et dirigée vers l'utilisateur est déviée par le deuxième noeud de réseau (NK2) vers le premier noeud de réseau (NK1) identifié par l'information relative à l'adresse (EGRN) mémorisée, et est de là retransférée vers le terminal (EG).

13. Procédé selon l'une quelconque des revendications 1 à 10,
**caractérisé en ce**
**que** l'information relative à l'adresse (EGRN) et le numéro d'appel d'utilisateur (BRN) sont transférés du premier noeud de réseau (NK1) outre vers le deuxième noeud de réseau (NK2) également vers d'autres noeuds de réseau (NK3) du réseau de communication, et en ce que l'information relative à l'adresse (EGRN) est mémorisée à cet endroit respectivement de manière associée à l'utilisateur identifié par le numéro d'appel d'utilisateur (BRN) transmis afin de retransférer à l'aide de l'information relative à l'adresse (EGRN) de manière consécutive des demandes de connexion entrantes dans l'un des autres noeuds de réseau (NK3) pour l'utilisateur identifié en direction du premier noeud de réseau (NK1).

14. Procédé selon l'une quelconque des revendications précédentes,
**caractérisé en ce**
**qu'**une information de sélection est lue en tant qu'entrée d'utilisateur supplémentaire et est transférée au deuxième noeud de réseau (NK2), où
les données de configuration (KD) à transférer sont sélectionnées parmi des données d'utilisateur en fonction de l'information de sélection transférée.

15. Procédé selon l'une quelconque des revendications précédentes,
**caractérisé en ce**
**qu'**une information de sélection dépendant des spécifications techniques du terminal (EG) et/ou du premier noeud de réseau (NK1) est transférée du premier noeud de réseau (NK1) au deuxième noeud de réseau (NK2), où les données de configuration (KD) à transférer sont sélectionnées parmi des données d'utilisateur en fonction de l'information de sélection transférée.
